# EUROPEAN PATENT APPLICATION

(11) **EP 2 239 736 A1**
(43) Date of publication of application: **13.10.2010**
(21) Application number: 09157383.2
(22) Date of filing: 06.04.2009
(51) Int. Cl.: G11B 19/02, H04L 12/24, G06F 3/048, H04H 60/04

(54) **Desktop control for a host apparatus of a digital multimedia network**

(71) Applicant: U-MAN Universal Media Access Networks GmbH, 40479 Düsseldorf (DE)
(72) Inventor: Gurdan, Robert, 91433, Graefenberg (DE); Foss, Richard, Grahamstown (DE)
(74) Representative: Charles, Glyndwr

(57) **Abstract**

The invention provides a desktop control and a browser for a host apparatus of a digital multimedia network. The desktop control comprises a processing core having at least one desk parameter link (DPL) to a device parameter of the host apparatus. Furthermore, the processing core can have at least one desk application link (DAL) to a browser application of the host apparatus. The processing core further has one or more desk item links to other desktop controls of another apparatus within the digital multimedia network.

## Description

The invention relates to a desktop control and a browser for a host apparatus of a digital multimedia network comprising audio and video apparatuses.

In contrast to most other industries digital networks have not gained much footage in the audio/video industry until today. The reason therefore is neither the lack of available technologies nor the demand for a digital solution. The problem lies more in the basic understanding how a substantial benefit for the user migrating from analogue to digital can be achieved. Due to the lack of a common standard, users who are using or even just experimenting with digital solutions have to either specialise their gear to fit it to custom solutions or reduce their expectations of the digital multimedia system so far that the system is not more than an audio data transport medium. With regard to digital multimedia networks there is a lack of integration of connection management with control and monitoring of parameters. Conventional networks require that a controller discovers all capabilities of target apparatus in the network before communication. Furthermore, conventional digital networks do not allow a flexible handling of parameters.

Accordingly, it is an object of the present invention to provide a user-friendly desktop control which is easy to handle and flexible in its use.

This object is achieved by a desktop control comprising the features of claim 1.

The invention provides a desktop control for a host apparatus of a digital multimedia network wherein said desktop control comprises a processing core having at least one desk parameter link (DPL) to a device parameter of said host apparatus.

In a possible embodiment of the desktop control, the processing core has at least one desk application link (DAL) to a browser application of said host apparatus.

In a possible embodiment of the desktop control, the processing core further has one or more desk item links (DIL) to other desktop controls of other apparatuses within the digital multimedia network.

In a possible embodiment, the processing core of the desktop control has access to a stored XML-file having attributes describing the graphical desktop control item of said desktop control wherein said desktop control item is displayed on a graphical user interface of said host apparatus.

In a possible embodiment, these attributes comprise bitmaps organized in files.

In a possible embodiment of the desktop control according to the present invention, the displayable desktop control items comprise desk item primitives including a button, a meter, a pot, a fader, a three-dimensional pad, a matrix, a wheel and a trackball.

In a possible embodiment of the desktop control according to the present invention, a hierarchical parameter address (HPA) that consists of parameter grouping identifiers each corresponding to hierarchy level of a predetermined tree-structured parameter hierarchy is used for addressing device parameters throughout said digital multimedia network.

In a possible embodiment of the desktop control according to the present invention, a parameter group list (PGL) is provided for each parameter group.

In a possible embodiment of the desktop control according to the present invention, the processing core synchronizes the device parameters of the host apparatus and other apparatuses of the digital multimedia network.

In an embodiment of the desktop control according to the present invention, the processing core responds to a command message (CMD) of a restricted device parameter of said host apparatus with a security code.

In a possible embodiment of the desktop control according to the present invention, the desk parameter link (DPL) to the device parameter is formed by setting a flag of the device parameter to a logical active value.

In a possible embodiment of the desktop control according to the present invention, the browser application running on the host apparatus provides a security level of a device parameter of said host apparatus through said desk application link (DAL) to said processing core of said desktop control.

In an embodiment of the desktop control according to the present invention, the displayable desktop control items are organized in a parent/child hierarchy with at least two layers, wherein a parent desktop control item comprises one or several child desktop control items, wherein a child desktop control item is copied along with its parent desktop control item on a display of said host apparatus.

The invention further provides a browser executable by a host apparatus of a digital multimedia network,
wherein said browser is adapted to upload graphical desktop control items from at least one apparatus of said digital multimedia network to display these desktop control items on a graphical user interface (GUI) of said host apparatus,
said graphical desktop control items each being described in a corresponding file accessible by a processing core of the desktop control of the host apparatus,
wherein said processing core comprises at least one desk parameter link (DPL) to a device parameter of the host apparatus.

In a further embodiment of the browser according to the present invention, the graphical user interface comprises a touch screen adapted to control or monitor at least one device parameter by a user.

In the following, embodiments of the desktop control and the browser according to the present invention are described with reference to the enclosed figures.
Figure 1 shows a topology of a possible embodiment of a digital multimedia network comprising host apparatuses each having a desktop control according to the present invention;
Figure 2 shows a background ring of routers as employed by the digital multimedia network as shown in figure 1;
Figure 3 shows a further example of a topology of a digital multimedia network according to the present invention comprising a cascaded ring structure;
Figure 4 shows a diagram for illustrating a digital multimedia network connecting several host apparatuses with each other, wherein each host apparatus is adapted to execute a browser according to the present invention;
Figure 5 shows a block diagram of a possible embodiment of a host apparatus comprising a desktop control according to the present invention;
Figure 6 shows an example of a desk parameter link DPL as employed by the desktop control according to the present invention;
Figure 7 shows a diagram for illustrating a desk application link DAL as employed by the desktop control according to the present invention;
Figure 8 shows an example of a desk item link DIL as employed by the desktop control according to the present invention;
Figure 9 shows a further example of a desk item link DIL as employed by the desktop control according to the present invention;
Figure 10 shows a further example of a desk item link DIL as employed by the desktop control according to the present invention;
Figure 11 shows a diagram for illustrating the obtaining of desk item information by a desktop control from remote target apparatuses according to a possible embodiment of the present invention;
Figure 12 shows a diagram for illustrating the joining of desk items and remote parameters according to a possible embodiment of the present invention;
Figure 13 shows a possible embodiment of a browser displayed on a graphical user interface of a host apparatus according to a possible embodiment of the present invention;
Figure 14 shows an example of an XML-file as employed by a desktop control according to the present invention;
Figure 15 shows an example of a graphical editor for desk items as employed by the desktop control according to the present invention;
Figures 16A, 16B show desktop control items of a button and display type as employed by the desktop control according to the present invention;
Figure 17 shows a desktop control item of a meter type as employed by the desktop control according to the present invention;
Figure 18 shows a desktop control item of a pot type as employed by the desktop control according to the present invention;
Figure 19 shows diagram for illustrating the adjustment of granularity of a pot type desktop control item as shown in figure 17;
Figure 20 shows an exemplary desktop control item of a pot type having the form of a needle meter as employed by the desktop control according to the present invention;
Figure 21 shows a desktop control item of a slider type as employed by the desktop control according to the present invention;
Figure 22 shows a desktop control item of a matrix type as employed by the desktop control according to the present invention;
Figure 23 shows a desktop control of a three-dimensional pad type as employed by the desktop control according to the present invention;
Figure 24 shows a desktop control item of a wheel type as employed by the desktop control according to the present invention;
Figure 25 shows a desktop control item of a trackball type as employed by the desktop control according to the present invention.

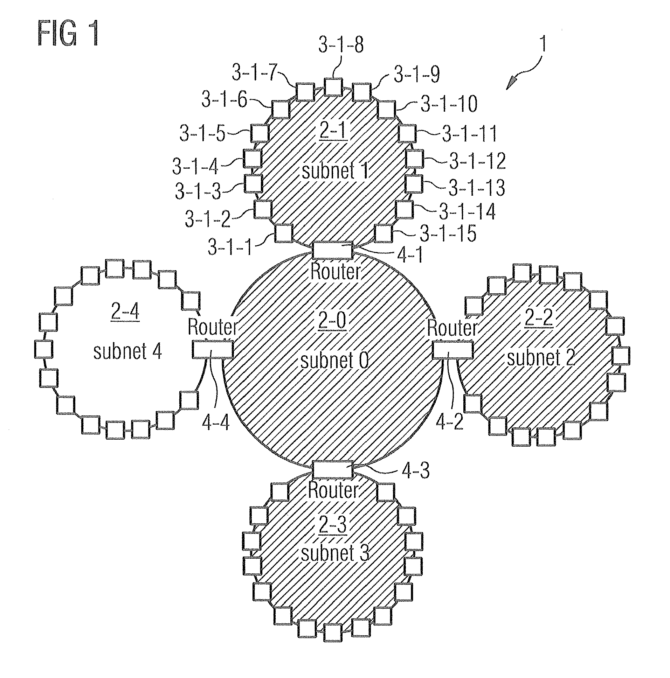

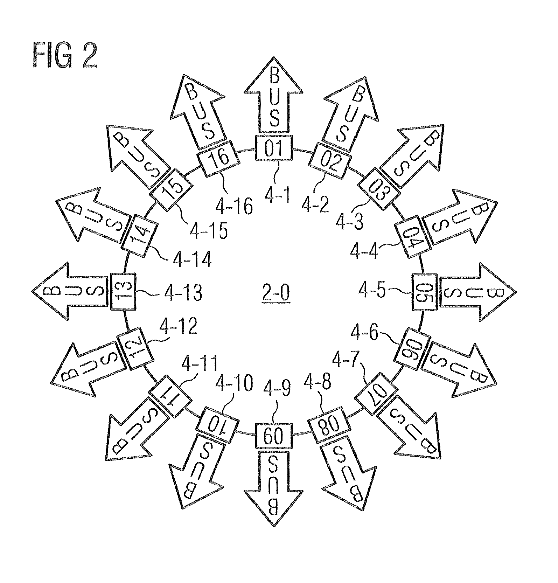

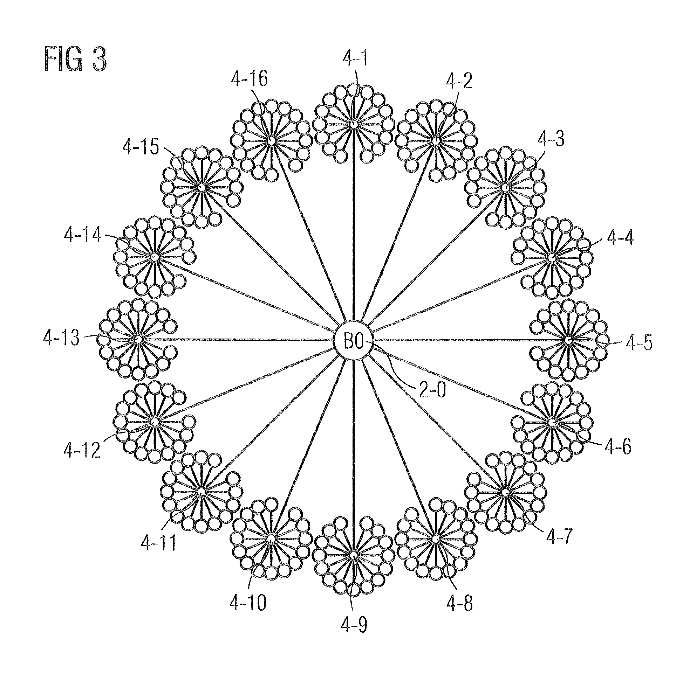

As can be seen from figures 1-3, a digital multimedia network 1 comprising a plurality of video and audio apparatuses each forming an apparatus with a control device 3 can be organized in subnets 2-i that form together the actual digital multimedia network 1. Each host apparatus can comprise several device parameters which can be controlled by a processing core. There is no limitation to the number of subnets 2-i within the digital multimedia network 1 of the present invention. In a possible embodiment, the digital multimedia network 1 comprises a ring connection topology. In bigger systems, a bigger ring of e.g. 16 routers 4 of a backbone 2-0 connect all other subnets 2-i to the digital multimedia network 1. To each router 4 a group of multimedia apparatuses or host apparatuses 5 can be connected. Each of these host apparatuses 5 can comprise a control device 3. This control device 3 can be integrated in the respective multimedia apparatus 5, such as a mixing console, or can be connected to the respective multimedia apparatus 5 via an interface. At least some of the host apparatuses 5 form control host apparatuses having a graphical user interface GUI for displaying desktop control items. A desktop control is displaying said desktop control item on the said graphical user interface GUI and comprises a processing core having at least one desk parameter link DPL of a device parameter of the respective host apparatus 5. In the embodiment as shown in figures 2, 3 the digital multimedia network 1 uses cascaded backbones. The center backbone 2-0 in the middle hosts e.g. 16 routers 4 which can be individually connected to a corresponding number of satellite routers. These satellite routers are each connected via a bus that hosts e.g. 15 control devices 3 configured within or connected to a digital multimedia apparatus 5, such as an audio or video apparatus.

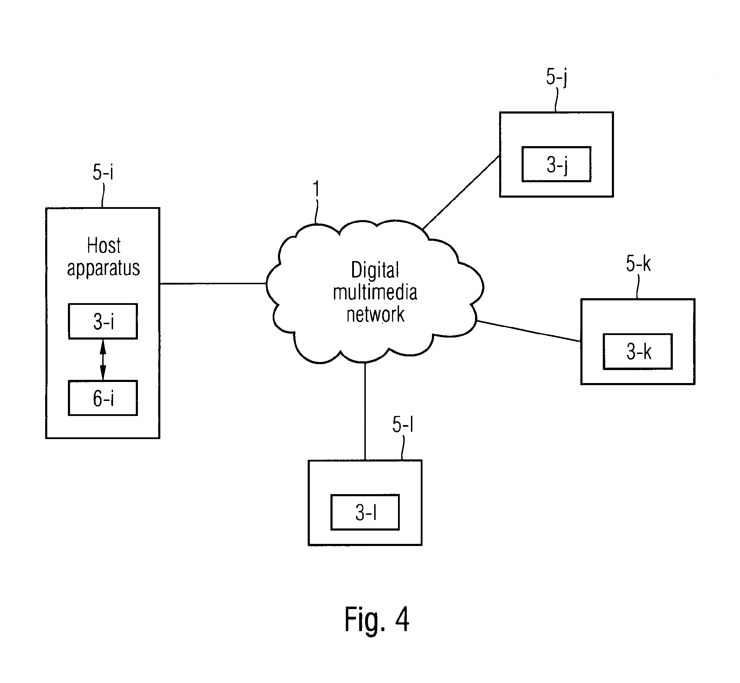

Figure 4 shows a diagram of a digital multimedia network 1 according to the present invention connecting several host apparatuses 5-i each having a control device 3-i with each other. The control device 3 is inter alia provided for performing desktop control functionality where desktop controls control desktop control items displayed on a graphical user interface 6-i of the respective host apparatus 5-i. As shown in figure 4, it is not necessary that each host apparatus of the digital multimedia network 1 comprises a graphical user interface GUI, however each host apparatus providing a control function for other host apparatus within the network has in a preferred embodiment a graphical user interface 6-i for a user. An example for such a controlling host apparatus 5 is a mixing console which has an input section that comprises a number of channel strips each with a number of parameter groupings which in turn contain a number of device parameters. Preferably, these parameter groupings are natural to audio engineers and are reflected in the grouping of the apparatus hierarchy.

In a possible embodiment, each control device 3 of a host apparatus 5 within the digital multimedia network 1 as shown in figure 4 comprises an IP stack and is addressable via its IP address. Above the IP stack each control device 3 incorporates in a possible embodiment a protocol layer which contains a tree-structured parameter address hierarchy. This parameter address hierarchy reflects the structure of the respective apparatus 5 in which the control device 3 is integrated or to which it is connected.

The bottom most level of the hierarchy, nodes (leaves of the tree) are actual parameter values and their data formats. Any device or apparatus parameter has a fixed number of groupings from the parameter level up to the top most grouping level. A different level description can be used for different industries, such as audio, video or avionics. The address of a particular device parameter controlled by the control device 3 can be constituted from a list of several grouping IDs, for example seven parameter grouping IDs or level IDs. These groups and the associated IDs can be published. For example, a manufacturer can follow a specification guide regarding the structuring of device parameters controlled by the control device 3 of a multimedia host apparatus 5 as shown in figure 4. Because of the level structure of the messaging, "wildcard" IDs can also be used as level IDs indicating a selection of all nodes at the next level of the hierarchy tree. These wildcard IDs allow for the control of a large number of device parameters with a single command message CMD, which can be broadcasted to all control devices 3 of the digital multimedia network 1.

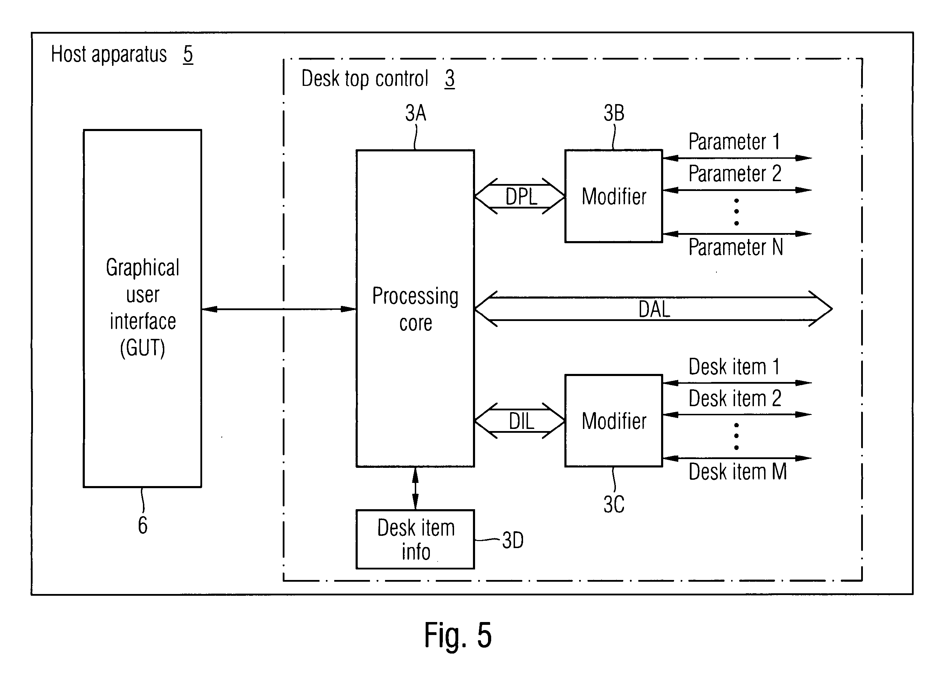

Figure 5 shows a block diagram of a host apparatus 5 within the digital multimedia network 1 comprising a desktop control 3 according to the present invention. As shown in figure 5, the desktop control 3 comprises a processing core 3A having at least one desk parameter link DPL to a device parameter of the host apparatus 5. The processing core 3A of the desktop control 3 can handle any parameter information that is sent to it. The processing core 3A synchronizes parameter values and updates every parameter linked to it. Within the embodiment as shown in figure 5, the processing core 3A comprises a desk parameter link DPL to N parameters via a modifier 3B. By means of the modifier 3B a hierarchical parameter address HPA or a parameter value of the respective device parameter P can be changed.

In the embodiment as shown in figure 5, the processing core 3A of the desktop control 3 has a desk application link DAL to a browser application of the host apparatus 5. In a possible embodiment, the browser application is executed by a processing unit of the host apparatus 5 such as a microprocessor.

As shown in figure 5, the processing core 3A of the desktop control 3 further has one or more desk item links DIL to other desktop controls. In the embodiment as shown in figure 5, the processing core 3A has desk item links DILs to M desk items. In a possible embodiment a modifier 3C is provided. The processing core 3A further has access to a memory 3D which stores desk item information data of desk items. In a possible embodiment the memory 3D stores XML-files of desk items. Each XML-file can have attributes describing graphical desktop control items which can be displayed on the graphical user interface 6 of the host apparatus 5. These attributes can comprise bitmaps organized in files. In a possible embodiment, the files are stored in a compressed data format. Said displayable desktop control items comprise desk item primitives such as a button, a meter, a pot, a fader, a three-dimensional pad, a matrix, a wheel or a trackball.

In a possible embodiment, a receiving control device of a target apparatus can receive commands from a controller of a sending control device of a source apparatus. In this embodiment, it is possible to trace through a hierarchical tree-structure of a control device by using level commands. These level commands can return for each node of the hierarchical tree the sub-nodes below the respective node. Through the application of this kind of level commands it is possible to discover device parameters of remote devices and to control them.

In a possible embodiment, command messages CMD between control devices 3 of different host apparatuses 5 are transmitted in an IP data package having at least one command message as payload data. In a possible embodiment, the digital multimedia network 1 as shown in figure 4 employs a hierarchical control protocol. The digital multimedia network 1 employs a control protocol whose fixed hierarchical message structure models the groupings of device parameters as found for example in professional entertainment devices or apparatuses 5, thus allowing for a comprehensive control of control devices 3 within such entertainment apparatuses 5.

In the hierarchical command and control protocol each device parameter of the host apparatus 5 can be stored in a register or memory of the control device 3 or of the corresponding host apparatus 5 and can be addressed via hierarchical structures reflecting the natural layout of the respective apparatus 5 to which the control device 3 is connected. For example, if the apparatus 5 is formed by a mixing console there can be an input section on the mixing console apparatus 5 that has a number of channel strips. Each channel strip can for example have a gain control, a block of equalizers and a fader control. At the lowest hierarchical level of any host apparatus 5, the device parameters, i.e. the parameters of the corresponding apparatus 5 are provided.

Apart from addressing a device parameter of a host apparatus 5 via its hierarchical position in the respective apparatus 5 it is also possible to address a device parameter via a unique identifier. In a possible embodiment, each device parameter of a host apparatus 5 has a unique ID which can be obtained by addressing the device parameter and requesting the ID. Command messages can replace the hierarchical parameter address groups HPA and provide an appropriate identifier to access the respective device parameter thereby reducing the message bandwidth.

In a possible embodiment of the control protocol as employed by the digital multimedia network 1 according to the present invention, it is possible to join device parameters into parameters groups. A device parameter can hold in this embodiment a list of other device parameters on the same or different apparatuses 5 to which it is joined. If a device parameter is modified by a command message CMD, the same command message can be directed to all device parameters within its parameter group list PGL. For the example of a fader in a mixing console, a host apparatus 5 typically has a device parameter that represents its position. This device parameter can be joined to fader parameters within other mixing consoles and possibly to gain parameters on breakout boxes. If the fader is moved, its parameter group list PGL is scanned and command messages CMD are sent to all device parameters within the respective parameter group.

If part of a group, the processing core 3A of the desktop control 3 as shown in figure 5 can synchronize device parameters of the host apparatus 5 and other apparatuses of the digital multimedia network 1. The processing core 3A can synchronize parameter values and can update every parameter linked to it.

As shown in figure 5, the processing core 3A has at least one desk parameter DPL to a device parameter of the host apparatus 5. The desk parameter link DPL can be initiated, activated and maintained as well as terminated by a desk item. A desk parameter link DPL is a multilink, e.g. the desk parameter link DPL can link several device parameters to the desk item through the modifier 3B with a memory bank.

In a possible embodiment, the modifiers 3B, 3C of the control device 3 as shown in figure 5 are provided for modifying a command message CMD received from a source apparatus to control a target device parameter of a target apparatus within the digital multimedia network 1. In a possible embodiment, a hierarchical parameter address or a parameter value contained in such a command message is changed according to at least one change script to provide a modified command message. The employed hierarchical parameter address HPA can consist of parameter grouping identifiers each corresponding to a hierarchy level of a predetermined tree-structured parameter hierarchy used for addressing device parameters throughout the digital multimedia network 1. A group of modifier parameters can comprise input value parameters IVP, output value parameters OVP, value script variable parameters and level script value parameters LVP for each hierarchy level of the respective tree-structured parameter hierarchy of the network 1. The value change script is provided to change the parameter value of the received command message sent by a source apparatus as an input value parameter IVP of the modifier. The received parameter value is processed according to the value change script to calculate a modified parameter value used to update the parameter value of the output value parameter OVP of the modifier. Such a value change script can be stored in a memory of the modifier 3B, 3C. For each level script value parameter LVP, a corresponding level script can be provided in a possible embodiment. In a possible embodiment, the hierarchical parameter address HPA is processed according to the level scripts to generate a modified hierarchical parameter address HPA of the modified command message to address another target parameter. The input value parameter IVP can be joined in an input parameter group of device parameters and the output value parameter OVP can be joined in an output parameter group of device parameters.

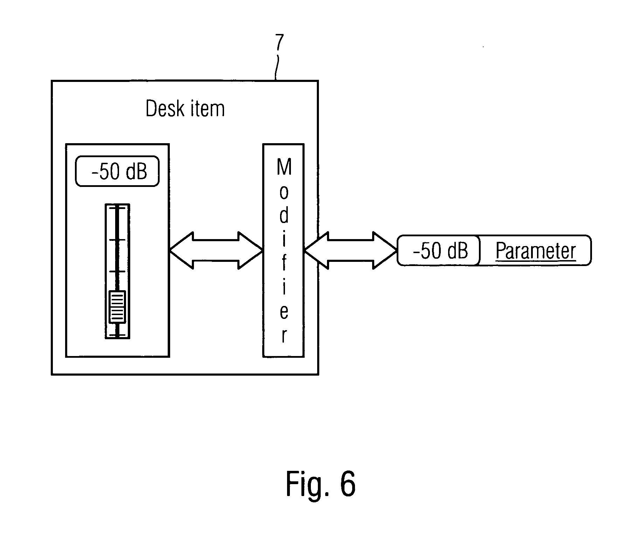

Figure 6 shows an example of a desk item having a desk parameter link DPL to a device parameter which in the given example is an adjustable gain of an amplifier. The desk parameter link DPL can be established by the desk item 7 as shown in figure 6 in two ways. In a first variant, a desk item active flag is set to "true". After this, the parameter value of the respective device is pushed out by the control device. This is preferably done using a watch dog in order to prevent the digital multimedia network 1 from being flooded with old data after a while. The watch dog can be provided within the control device 2 to reset the desk item after a predetermined time of, for example ten seconds. Any desk item that wants to use the given information can reset the flag of the desk item and the watch dog within this time period. In this embodiment, it is for the control device not necessary to know how many desk items are listening and how many of them are actually off-line. For example, ten seconds after the last desk item went offline the control device stops pushing its data out.

In an alternative variant, to establish a desk parameter link DPL, the desk item can join a parameter and form a parameter group. This variant can be used in more highly secured environments and enables a certain parameter value to be monitored and altered by authorized users only. However, this variant causes a higher overload if several desk items listen to the same device parameter.

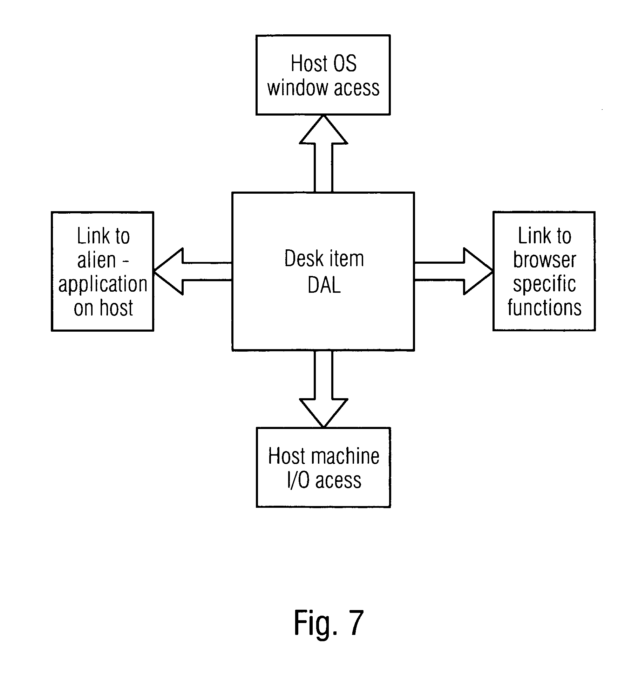

In a possible embodiment, the processing core 3A has at least one desk application link DAL to a browser application running on the host apparatus 5. Figure 7 shows a diagram for illustrating such a desk item application link (DAL). This desk item application link is a link to a host application of the respective desk item. The desk application link DAL gives the desk items the possibility to use each of the host applications in a way necessary and defined in the API of the desk application link. Through the desk application link DAL a desk item can handle generalized security of its device parameters in a way that it asks the browser for its security level. If the browser can provide the proper security level, it connects to its device parameter using its device parameter link DPL without requesting a security code. Otherwise, dependent on the preferences of the browser the desk item can either be deactivated or ask for authorization. Through the desk application link DAL the desk item is also able to utilize specific functions like opening and closing windows, communicating to other applications or interfaces on the host apparatus 5.

The processing core 3A of the desktop control 3 according to the present invention comprises one or more desk item links DIL to other desktop controls of other host apparatuses 5 within the digital multimedia network 1. The desk item link DIL can be used for the purpose that one desk item has to control another desk item.

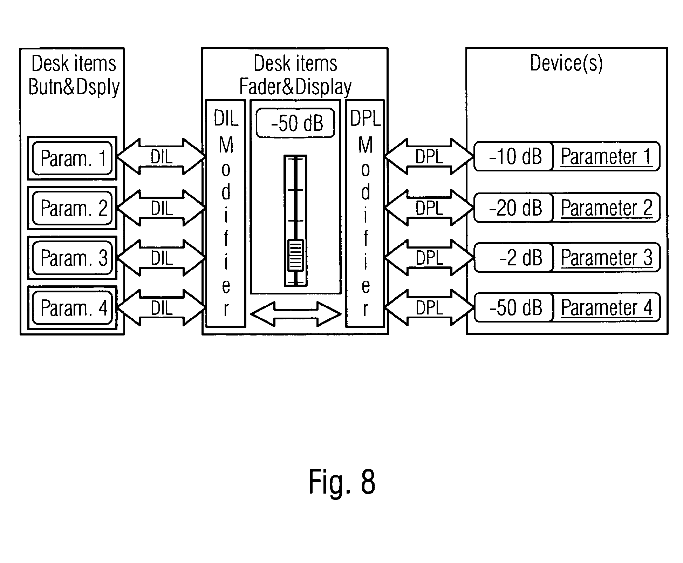

Figure 8 shows an example of a desk item link DIL as employed by a desktop control 3 according to the present invention. In the example shown in figure 8, four desk items of a button type each have a desk item link DIL to a modifier of another desk item being formed by a fader/display desk item. The desk item link DIL modifier from the displayed fader/display desk item is inactive. Every button can set a different state in the desk parameter link modifier that switches one of the four parameter links to the fader/display. The desk parameter link modifier memorizes all four recent parameter values and sends the correct one to the fader/display desk item each time a button is pressed. The desk parameter (DPL) modifier can update all four buttons, if a change has occurred with the latest proper state. The set-up as shown in figure 8 is a typical select scenario incorporating four buttons as select buttons.

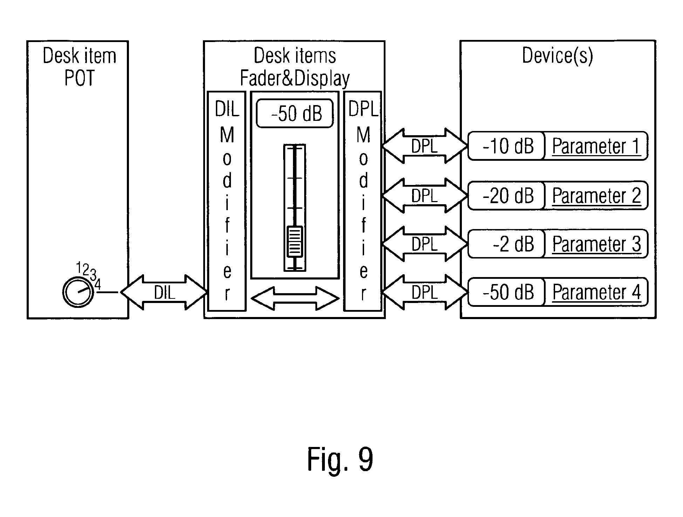

Figure 9 shows a further example for providing a desk item link DIL. In the shown embodiment, a desk item of a pot type comprises a desk item link DIL to a modifier of a fader/display desk item. The desk item link modifier of the fader/display item is inactive. In the given example, the pot desk item link has four different values. Each pot state sets a different state in the desk parameter link modifier. The desk parameter link (DPL) modifier memorizes all four recent values and sends the correct one to the fader/display desk item, wherein the desk item pot is set to a new value. The DPL modifier updates the pot if a change has occurred, with the latest proper state.

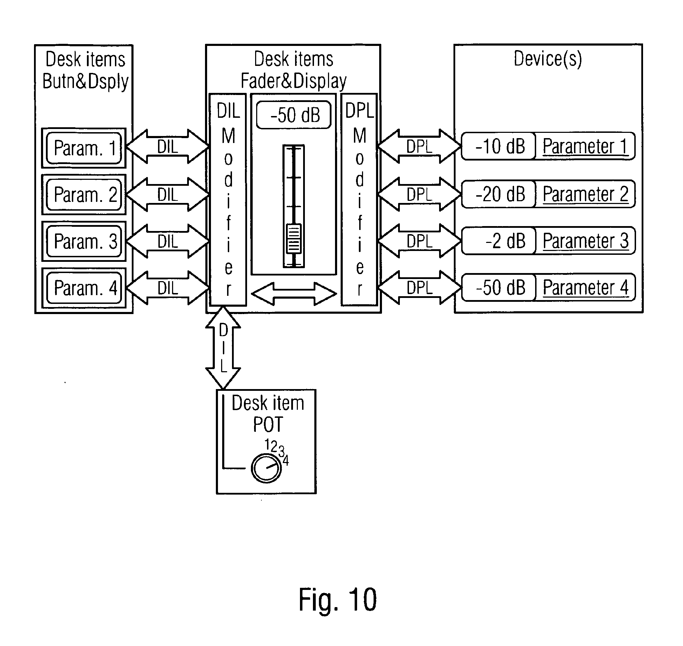

Figure 10 shows a further exemplary embodiment for illustrating a desk item link DIL. In the example as shown in figure 10, the desk item of the pot type comprises a desk item link (DIL) to a modifier of a fader/display desk item. The desk item link (DIL) modifier of the fader/display desk item is active. In the given example, the desk item pot comprises four different values. Every pot state sets a different state in the DIL modifier of the fader/display desk item. Every button of the four buttons of the desk items on the left side sets a different state in the DPL modifier that switches one of the four parameter links to the fader/display.

The DPL modifier and the DIL modifier memorize all four recent values and send the correct one to the fader/display each time a button is pressed. The DPL and DIL modifiers update the desk item pot if a change has occurred with the latest proper state. The example as shown in figure 10 is a typical realization of a monitor speaker DIM set-up. Only the buttons 1 to 4 of the button desk items can set a global DIM state of the DIM system while the desk item of the pot type can set a sub-set of those states (e.g. 1 is all DIM 0 dB; 2 is all DIM -10 dB; 3 is all DIM -20 dB; 4 is all DIM -40 dB).

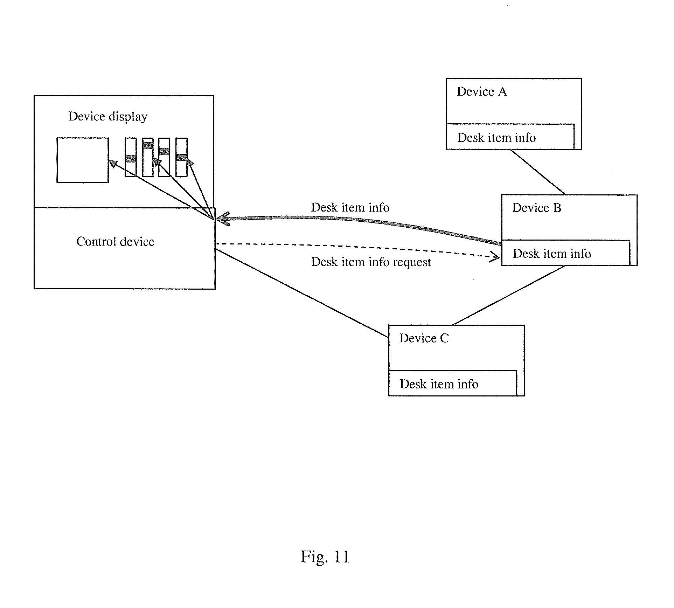

Figure 11 shows a diagram for illustrating the extraction of desk item information data by a desktop control 3 according to the present invention from a remote target apparatus. Each desk item can have a device parameter associated with it which can be referred to as a "control parameter". The value of this control parameter is considered to be the value of the desk item. This association of the desk item with a control parameter allows for joining of desk items to other desk items, and also to parameters of other apparatuses. The capability of joining desk item parameters to other desk item parameters allows for interaction between desk items on a display of a graphical user interface 6. The capability of joining desk item parameters and parameters on remote target apparatuses allows for desk item control over these remote device parameters known as action parameters.

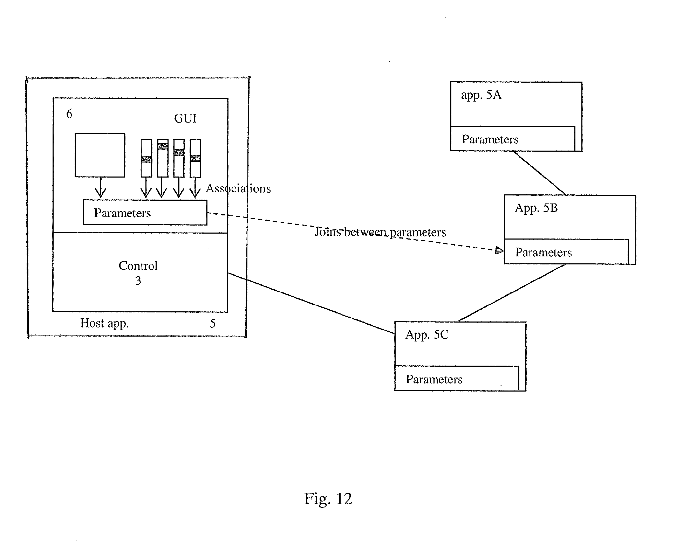

Figure 12 shows the association of desk items with control parameters and the joining of control to action device parameters. In the example of figure 12, the control host apparatus 5 comprises a control unit 3 implementing a desktop control. The desktop control 3 of the host apparatus 5 is connected to a graphical user interface 6 comprising for example a touch screen. The device parameters of the host apparatus 5 can be joined with other device parameters of further host apparatuses 5A, 5B, 5C connected to the control host apparatus 5 via a network. In a possible embodiment, an action parameter such as a gain can push its current parameter value to the control variable associated with a desk item. Such a capability is for example useful if a meter desk item is used to display varying parameter values of, for example a gain parameter.

In a possible embodiment, displayable desktop control items are organized in a parent/child hierarchy with at least two layers. A parent desktop control can comprise one or several child desktop control items. A child desktop control item is copied along with its parent desktop control item on a display of the respective host apparatus 5.

In a possible embodiment, there are certain rules associated with the display of desk items that have a parent/child relationship. When a graphical desk item is copied from one part of a display to another part, then its child desktop control items are copied along with it. Graphical images comprising a child desk item are always copied over the images of a parent desktop control item. There are "Z-axis" relationships between child desktop control items. Each child desktop control item of a particular parent desktop control item can have a Z-value or property Z1, Z2, Z3, etc. This Z-value indicates the precedence for the display of the graphical user interface 6 of the host apparatus 5. If two child desktop control items (with values Z1, Z2) are to be displayed on the same location on the screen, the child desktop control item with the higher precedence (of e.g. Z1) is displayed with its background and non-background images. The child desktop control item with the lower precedence (Z2 < Z1) has its non-background images displayed at locations, where only the background image of the higher precedence child desktop control item is displayed.

The invention further provides a browser which is executable by the host apparatus 5 of the digital multimedia network 1. This browser is adapted to upload graphical desktop control items from at least one apparatus 5 of the digital multimedia network 1 to display these desktop control items on the graphical user interface 6 of the host apparatus 5. The graphical desktop control items can be described in corresponding files accessible by the processing cores 3A of the desktop controls 3 of the host apparatus 5. The processing core 3A comprises at least one desk parameter link DPL to a device parameter of the host apparatus 5.

The desk item browser according to the present invention is an application or program executable on a host apparatus 5 and displays desk items on a screen of the graphical user interface 6. The desk item browser is responsible for uploading desk items from desktop controls of other apparatuses and for displaying these uploaded desk items on the display of the graphical user interface 6 of the host apparatus 5. In a possible embodiment, the desk item browser according to the present invention further stores desk item information data in a local storage such as the memory 3D as shown in figure 5 to facilitate a quick display.

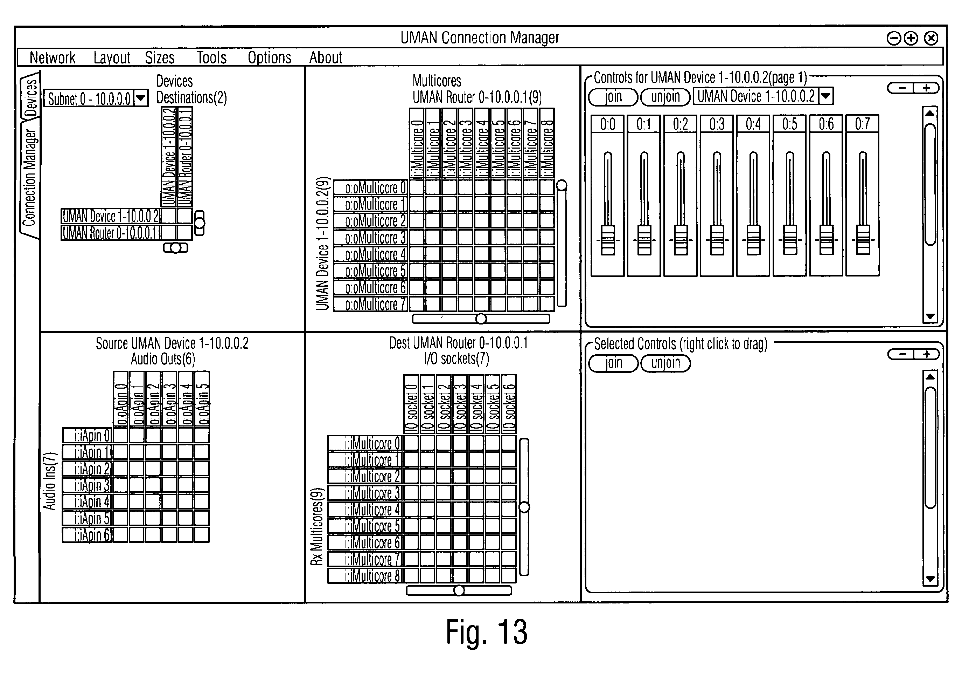

An exemplary desk item browser displayed on a graphical user interface 6 of a host apparatus 5 is shown in figure 13. The browser application starts-up and interrogates apparatuses for their desk item information. The browser application requests this information data from a particular apparatus and upon receipt interprets the received information data to display the desk items according to a prescribed layout. Figure 13 shows an initial display of a desk item browser. As can be seen from figure 13 there are a number of desk items that are displayed on a screen of a graphical user interface 6. In the given example, there is further a matrix that displays apparatus-to-apparatus connections, a matrix that displays multicore-to-multicore connections and a matrix that displays internal apparatus connections. There is a matrix that displays internal router connections. A set of sliders as shown in figure 13 allows for a gain control over the outputs from an apparatus 5.

In a possible embodiment, various desk items displayed on the screen are skinned in a particular way and have a particular layout on the display of the graphical user interface 6. The desk items shown in the display of the given example of figure 13 all belong to a certain apparatus and the different apparatuses can be selected for display.

In a possible embodiment of the desk item browser as shown in figure 13, the respective desk items, their images and their layout can be described within an XML-file that is stored within the selected apparatus.

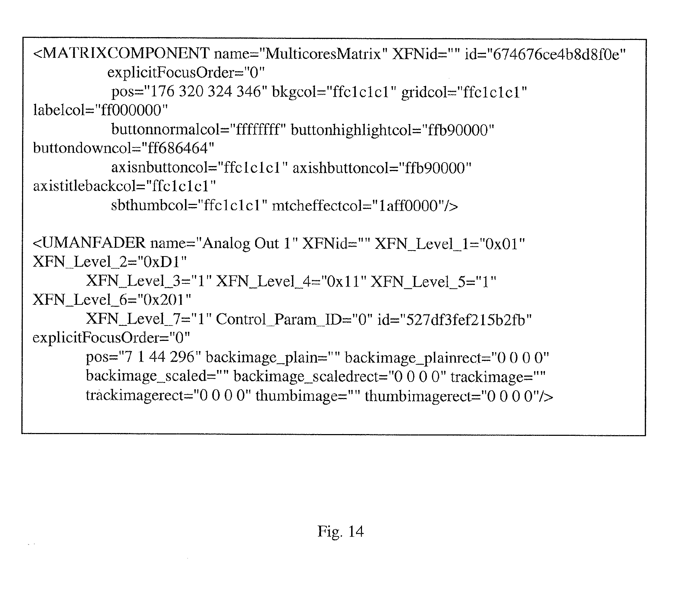

Figure 14 shows an example of an XML-file for two desk items, i.e. a matrix desk item and a slider desk item. Each of these desk items is described by an XML-element matrix component and slider for the matrix and slider desk items, respectively.

Each of the elements as shown in figure 14 has a number of attributes. These attributes determine various aspects of the display of the respective desk item. An example for these attributes with regard to a fader are seven XFN levels that fully describe a device parameter (such as a gain) that the desk item is associated with, and that it controls. A further attribute is the position (POS) to determine a position of the displayed slider. Other attributes are the back image and the track width. The back image is provided to determine a background image for the slider and the track width determines a track width of the respective slider.

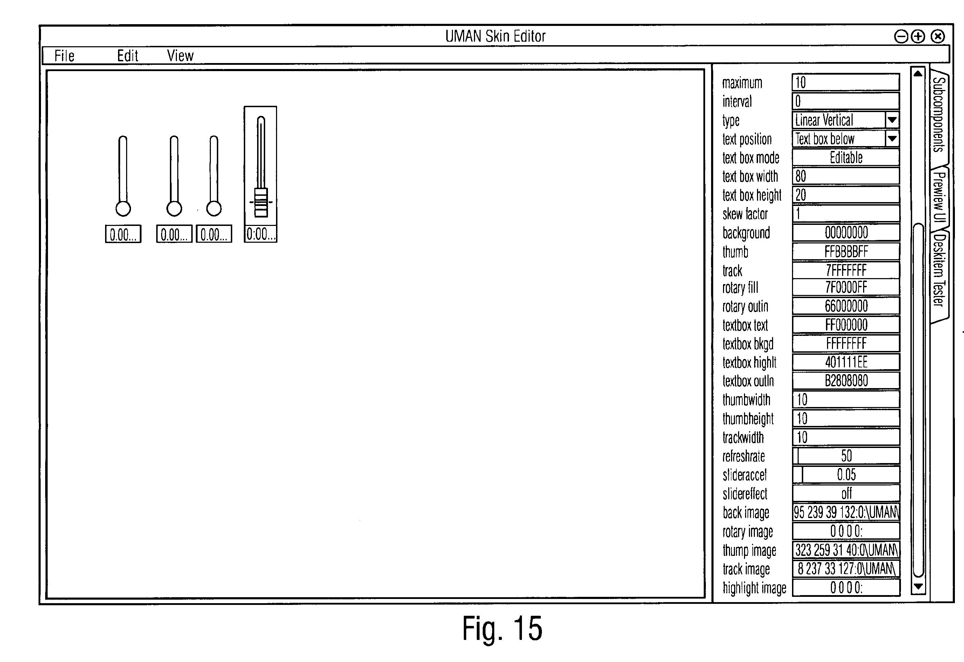

In a possible embodiment, the various attribute values for desk items can be established by means of a graphical editor. Figure 15 shows an example of a graphical editor for desk items and for generating attribute values. As can be seen from the example of figure 15, various values can be assigned to the slider such as colours of various slider components, text box width, colour of track etc. Furthermore, the graphical editor allows to associate images with various features of the slider such as thumb image, track image etc. The graphical editor as shown in figure 15 allows for a placement of a number of types of desk items.

The displayable desktop control items can comprise several desk item primitives such as a button, a meter, a pot, a fader, a three-dimensional pad, a matrix, a wheel and a trackball. These fundamental desk item types allow a user a wide range of parameter control and parameter display options. These kinds of fundamental desk items can often appear in combination on a display of the graphical user interface 6 in order to facilitate comprehensive control and monitoring of the device parameters.

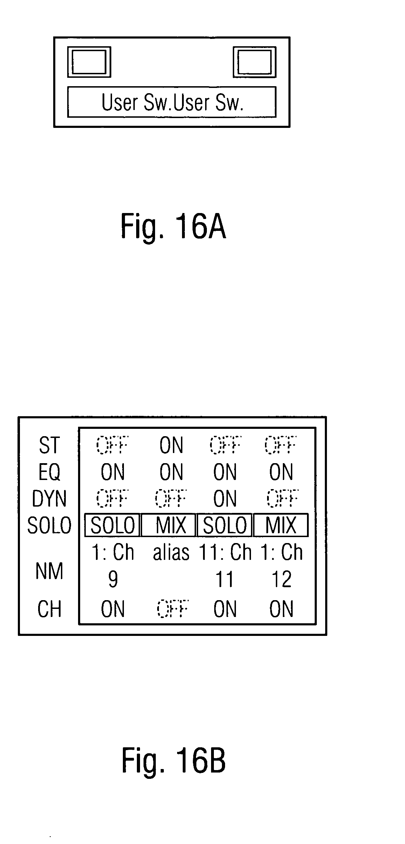

Figures 16A, 16B show examples for a display/button type desktop item as used by the desktop control according to the present invention. Displays typically have active areas that can be selected, and such active areas provide the functionality of a button. The number of attributes accurately describe a desk item of the button type such as the position on the screen, the position of active areas, nature of a font where there is writing, and foreground and background bitmaps.

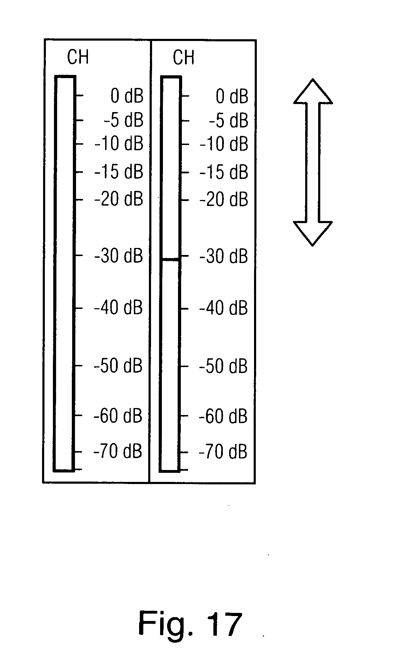

Figure 17 shows a desktop control item of a meter type. This meter type desktop control item can be used for the display of parameters levels. The attributes required to accurately describe a meter type desktop control item include its position on the screen of the graphical user interface, the foreground and background bitmaps and information for the blending of bitmaps, information data whether the meter is vertical, horizontal or circular as well as meter fall and rise times.

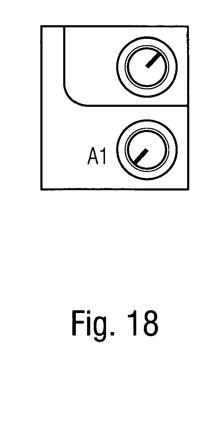

Figure 18 shows an example of a desktop control item of a pot type. A pot type desktop control item as shown in figure 18 can provide for a single value or two values of control. In the shown example of figure 18, the top pot has a two-value control where the outer ring provides for the second value control while the lower pot provides a single value control.

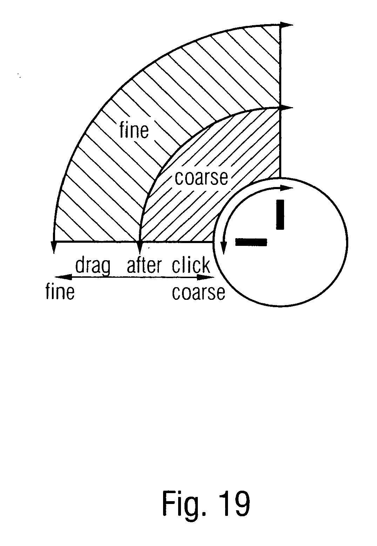

There can be further ring controls on a pot type desktop control item. In a possible embodiment, it is possible to adjust a granularity (fine or coarse) of a pot type desktop control item by dragging away from the pot type desktop control item when performing an adjustment. This procedure is shown in figure 19. Figure 19 shows an adjustment of granularity of a pot type desktop control item as employed by the present invention.

A pot type desktop control item can also be specialized in providing a needle meter such as used in cyclic displays.

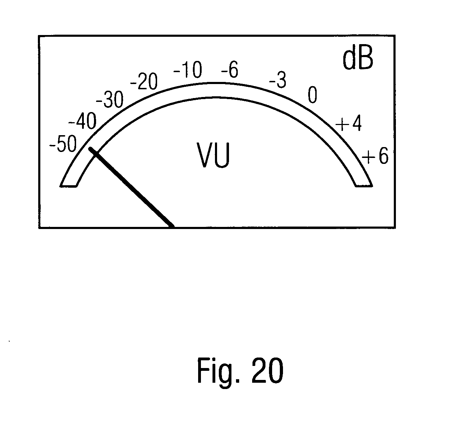

Figure 20 shows an example of a needle meter implemented by a pot type desktop control item. In the given example, the center of the pot type desktop control item is located outside the bitmap. A number of attributes are used to describe a pot type desktop control item including its position, one or more active parts (for multi-value control), background and foreground bitmaps, a granularity of control and various needle parameters.

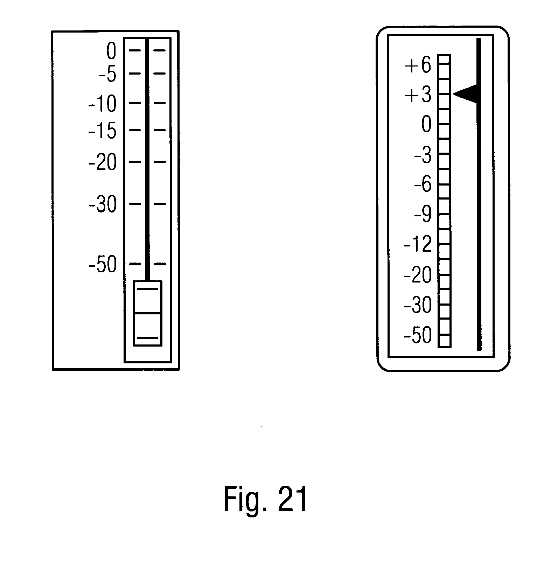

Figure 21 shows an example of a slider type desktop control item as employed by the present invention. A slider desktop control item is often used for a fader control that allows for a volume fading. An example of this shown in the left slider of figure 21. The slider desktop control item can also be used for the modification of other parameter types. For example, it can be used for a needle style meter display. In a possible embodiment, there are a number of attributes associated with a slider type desktop control item. These attributes include the position of the slider on the screen of the graphical user interface 6, the background and foreground bitmaps, a location of the active part of the slider, the slider steps associated with a fine movement and coarse movement of the slider on the screen.

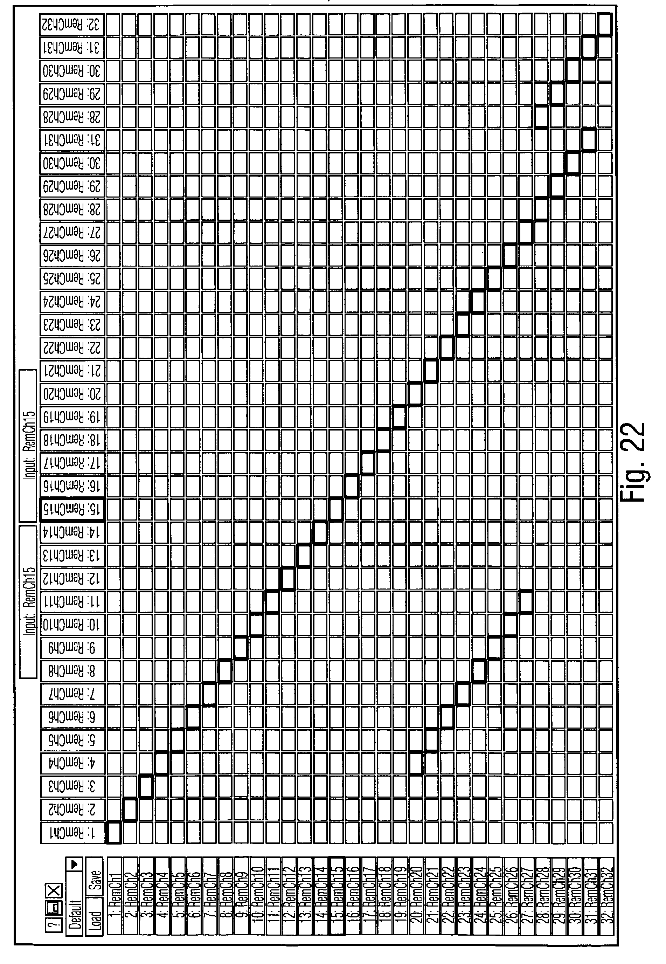

Figure 22 shows an example for the matrix type desktop control item as used by the present invention. The matrix desktop control item as shown in figure 22 can be used to control the routing of audio and video data streams from a source to a target apparatus. The matrix type desktop control item is able to provide a control over switching matrixes and mixing matrixes.
A matrix type desktop control item can have a number of attributes including the position of the matrix on the screen of the graphical user interface 6, a background bitmap, bitmaps for the foreground, the nature and type of lettering used for labels and the sizes of cross-points.

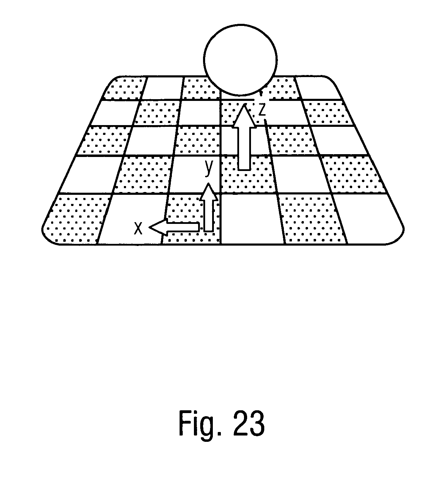

Figure 23 shows an example of a three-dimensional pad type desktop control item as provided by the present invention. This kind of three-dimensional pad type desktop control item can be used to control up to three parameters at a time. For example, a bass, treble and volume parameter of an output channel on a home entertainment audio system can be controlled with one hand by means of such a three-dimensional pad type desktop control item. A number of attributes which are supplied for the display of an xyz three-dimensional desktop control item are shown in figure 22 including the position of the pad on the screen, the background bitmap, the foreground bitmap and the positions of the active parts of the desk item.

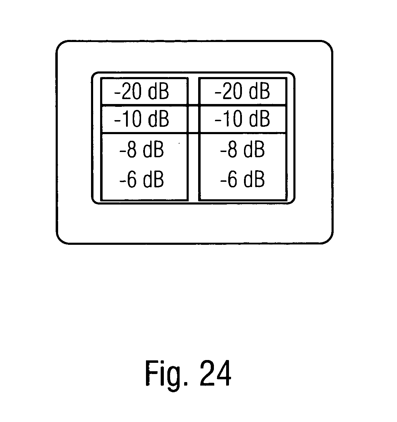

Figure 24 shows an example of a wheel type desktop control item as employed by the present invention. The wheel type desktop control item consists of a wheel that can rotate endlessly. The speed of rotation of the wheel type desktop control item depends on how fast it is moved up or down by a user. In a preferred embodiment the wheel type desktop control item comprises a momentum and continues running for a while after the user has stopped to activating the wheel. This feature enables a user to scan through a large range of parameter values in a short period of time. The wheel type desktop control item as shown in figure 24 can be used with a touch screen of the graphical user interface 6. There are a number of possible attributes for a wheel type desktop control item as shown in figure 24, including the position of the wheel on the screen of the graphical user interface 6, foreground and background of bitmaps, the acceleration and de-acceleration factors of the displayed wheel and a fine/coarse step of the wheel.

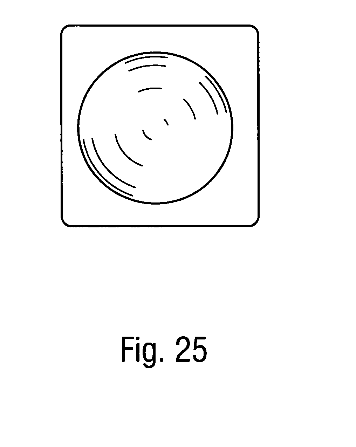

Figure 25 shows a further example of a track type desktop control item as employed by the present invention. The trackball desktop control item as shown in figure 25 is similar to a wheel type desktop control item as shown in figure 24. It can be spun and hence allow for rapid parameter changes. Unlike the wheel type desktop control item shown in figure 24, where there is only one axis the trackball type desktop control item as shown in figure 25 comprises two axis of rotation and hence allows for simultaneous control over two device parameters at the same time. The attributes for the trackball type desktop control item as shown in figure 25 include the position of the desk item on the screen, a background and foreground bitmap, fine and coarse increments in both x and y directions as well as the acceleration or de-acceleration factors of the respective trackball as shown on the display.

The desktop control items of the present invention allow a user to have read and write access to device parameter values. Information data about the nature of the desktop control items and the associated graphical images as well as the layout of the desk item for a particular apparatus resides within the host apparatus 5 itself. The host apparatus 5 can also comprise information that associates desktop control items with actual controllable device parameters of the apparatus such as gain and equalization device parameters.

The desktop control 3 of a host apparatus 5 as shown in figure 5 can also extract desk item information data from a remote target apparatus. This extracted information data enables the desktop control 3 to display the respective desktop control items in a desired layout. The user can control device parameters via the desk items displayed on a touch screen of a graphical user interface 6 of the host apparatus 5. Furthermore, device parameter values are displayed via specific desktop control items such as meter type desktop control items.

## Claims

1. A desk top control (3) for a host apparatus (5) of a digital multimedia network (1),
wherein said desk top control (3) comprises a processing core (3A) having at least one desk parameter link (DPL) to a device parameter of said host apparatus (5).

2. The desk top control according to claim 1,
wherein said processing core (3A) has at least one desk application link (DAL) to a browser application of said host apparatus (5).

3. The desk top control according to claims 1 or 2,
wherein said processing core (3A) has one or more desk item links (DIL) to other desk top controls of other apparatus within said digital multimedia network (1).

4. The desk top control according to claims 1-3,
wherein said processing core (3A) has access to a stored XML file having attributes describing a graphical desk top control item of said desk top control (3) wherein said desk top control item is displayed on a graphical user interface (6) of said host apparatus (5).

5. The desk top control according to claim 4,
wherein said attributes include bitmaps organized in files.

6. The desk top control according to claims 4 or 5,
wherein said displayable desk top control items comprise desk item primitives including a button, a meter, a pot, a fader, a three-dimensional pad, a matrix, a wheel and a trackball.

7. The desk top control according to claims 1 to 6,
wherein a hierarchical parameter address (HPA) that consists of parameter grouping identifiers each corresponding to a hierarchy level of a predetermined tree-structured parameter hierarchy is used for addressing devices parameters throughout said digital multimedia network (1).

8. The desk top control according to claim 7,
wherein for each parameter group a parameter group list (PGL) is provided.

9. The desk top control according to claims 1-8,
wherein said processing core (3A) synchronizes device parameters of the host apparatus (5) and other apparatuses of said digital multimedia network (1).

10. The desk top control according to claims 1-9,
wherein said processing core (3A) responds to a command message (CMD) for a restricted device parameter of said host apparatus with a security code.

11. The desk top control according to claims 1-10,
wherein said desk parameter link (DPL) to said device parameter is formed by setting a flag of said device parameter to a logical active value.

12. The desk top control according to claims 2-11,
wherein said browser application running on said host apparatus (5) provides a security level of a device parameter of said host apparatus through said desk application link (DAL) to said processing core (3A) of said desk top control (3).

13. The desk top control according to claims 4-6,
wherein said displayable desk top control items are organized in a parent-child hierarchy with at least two layers,
wherein a parent desk top control item comprises one or several child desk top control items,
wherein a child desk top control item is copied along with its parent desk top control item on a display of said host apparatus.

14. A browser executable by a host apparatus (5) of a digital multimedia network (1), wherein said browser is adapted to upload graphical desk top control items from at least one apparatus of said digital multimedia network (1) to display these desk top control items on a graphical user interface (6) of said host apparatus (5),
said graphical desk top control items each being described in a corresponding file accessible by a processing core (3A) of a desk top control (3) of said host apparatus (5),
wherein said processing core (3A) comprises at least one desk parameter link (DPL) to a device parameter of said host apparatus (5).

15. The browser according to claim 14,
wherein the graphical user interface (6) comprises a touch screen adapted to control or monitor at least one device parameter by a user.
